# EUROPEAN PATENT APPLICATION

(11) **EP 4 123 009 A1**
(43) Date of publication of application: **25.01.2023**
(21) Application number: 21187552.1
(22) Date of filing: 23.07.2021
(51) Int. Cl.: C12H 1/14

(54) **PROCESS FOR TARTARIC STABILIZATION OF WINES AND PRODUCTS DERIVED FROM WINE OR DERIVED FROM GRAPES**

(30) Priority: 22.07.2021 PT 2021117358
(71) Applicant: Universidade de Trás-os-Montes e Alto Douro, 5001-801 Vila Real (PT)
(72) Inventor: FERREIRA MILHEIRO NUNES, FERNANDO HERMÍNIO, 5001-801 VILA REAL (PT); GIL COSME MARTINS, MARIA FERNANDA, 5001-801 VILA REAL (PT); DA MOTA RIBEIRO, LUIS FILIPE, 5001-801 VILA REAL (PT)
(74) Representative: Neves, Ana

(57) **Abstract**

The present application concerns a process for tartaric stabilization of wines, such as white, rose, red, sparkling, fortified, late harvest or naturally sweet wines, which can also be used in products derived from wine or grapes, using alginic acid or its conjugate base, alginate. Alginic acid or alginate works as a protective colloid by slowing the growth of potassium hydrogen tartrate and calcium tartrate crystals. The use of alginic acid or alginate as tartaric stabilizer has the advantage of being a natural polysaccharide, obtained from a non-animal, non-allergenic source, posing no problems for consumption by vegetarians and vegans, and having an impact on wine quality similar or even inferior to the use of more conventional processes of tartaric stabilization of wine, namely cold stabilization, the use of metatartaric acid, and sodium carboxymethylcellulose.

## Description

### Technical field

The present application relates to a process for tartaric stabilization of wine and wine-derived or grape-derived products, which have tartaric instability, comprising the use of alginic acid or alginate.

### Background art

Tartaric instability is a phenomenon that occurs naturally in wines due to the formation of potassium hydrogen tartrate (KHT) crystals and calcium tartrate (CaT) crystals in wine after bottling (Greeff, Robillard, & du Toit, 2012). These crystals do not cause any health concerns but affect the acceptance of wine by consumers (Gerbaud, Gabas, Blouin, & Crachereau, 2010).

Some technological processes have been used to prevent tartaric instability in wines before bottling (Lasanta, & Gómez, 2012). Cold tartaric stabilization is the most widely used technology which consists of cooling wine close to its freezing point and keeping it at low temperatures for a period to reduce the solubility of potassium hydrogen tartrate (Ribéreau-Gayon, Glories, Maujean, & Dubourdieu, 2006). Electrodialysis and ion exchange resins are also techniques used for tartaric stabilization of wine (Lasanta, & Gómez, 2012). Electrodialysis uses ion selective permeable membranes, in this technique the migration of cations and anions from the wine to the electrolyte occurs (Lasanta, & Gómez, 2012). In ion exchange resins, potassium is replaced by hydrogen in potassium hydrogen tartrate, in acid cycle cationic resins, these resins are the most used and the only ones authorized in the European Union for wines (European Union (EU), 2009, Lasanta, & Gómez, 2012). Some oenological additives, such as metatartaric acid, mannoproteins, carboxymethylcellulose and, more recently, potassium polyaspartate, can also be used. These additives do not prevent KHT nucleation, but delay or even prevent the growth of tartrate crystals to a macroscopically visible size (Lasanta, & Gómez, 2012; Bosso et al., 2015).

The first additive used for tartaric stabilization of wines was metatartaric acid (Bosso, Salmaso, Faveri, Guaita, & Franceschi, 2010), a polymer obtained by esterification of tartaric acid, and its maximum dose allowed by the International Organization of Vine and of Wine (OIV) is 10 g/hL (Ribéreau-Gayon et al., 2006; OIV, 2021).

Mannoproteins from yeast cell walls are also authorized to prevent tartaric precipitation (OIV, 2021). Mannoproteins are highly glycosylated polysaccharides, mainly composed of mannose (>90%) and glucose, located in the cell walls of the yeast *Saccharomyces cerevisiae,* where they are covalently linked to the amorphous matrix of β-1,3-glucans (Rodrigues, Ricardo-da- Silva, Lucas, & Laureano, 2012).

Potassium polyaspartate is a homopolymer of potassium L-aspartate, produced from L-aspartic acid and potassium hydroxide. It has recently been approved for use in wine for tartaric stabilization (OENO Resolution 543/2016, 67 OIV, 2021) . At the pH of the wine it is negatively charged and allows for the sequestration of potassium cations; consequently, it retards the formation and growth of potassium hydrogen tartrate crystals acting as a protective colloid (Bosso et al., 2015).

The EU and OIV authorized in 2009 the use of carboxymethylcellulose (CMC), a common food additive (E 466) currently allowed at a maximum dose of 200 mg/L for tartaric stabilization of white, rose and sparkling wine (Resolution OIV-73 OENO 659-2020, OIV, 2021). CMC is a polymer produced from cellulose, consisting of β-D-glucose units substituted by organic carboxymethylcellulose acid, often in its sodium form (Gerbaud et al., 2010). CMC is characterized by its degree of etherification of its alcoholic groups: the degree of substitution (DS) and by its average number of glucopyranose units per polymer molecule: the degree of polymerization (DP). The latter determines the viscosity of the CMC and the higher the molecular weight, the higher the viscosity. Bajul, Gerbaud, Teychene, Devatine and Bajul (2017) confirmed the efficacy of CMC as an inhibitor of KHT crystallization in a model solution. This polysaccharide inhibits the formation of tartaric crystals and/or precipitation through a "protective colloid" effect. CMC has been used in the tartaric stabilization of white wine (Bosso et al., 2010; Guise et al., 2014). Gerbaud et al. (2010) highlight some characteristics of CMC, such as its stability under heating and in acidic solution, and even though it persists in wine, it does not pose a risk to human health (U.S. Food and Drug Administration, Federal Code of Regulations 21CFR182.1745). A study by Bosso et al. (2010) showed a similar efficiency between metatartaric acid and two CMC's, particularly with the more viscous one, in the tartaric stabilization of white wine. Another study carried out on white wines showed that all CMC's studied stabilized the wines, however their effectiveness depends on the degree of substitution of the CMC's and the wine matrix (Guise et al., 2014). Also, Ding, Hou, Li, Zhang, Zhao and Liu (2020) observed in red wine that generally CMC with a higher degree of substitution and lower viscosity had a better effect on the tartaric stabilization of red wine, which is in agreement with the results obtained by Guise et al. (2014) for tartaric stabilization of white wine. The use of CMC in wine is currently limited to white, rose and sparkling wines (Resolution OIV-OENO 659-2020, OIV, 2021) because its application to red wines is reported as less efficient (Moutounet, Bouissou, & Escudier, 2010) and can lead to loss of color and formation of turbidity (Lasanta, & Gómez, 2012) . To explain the loss of color, the involvement of proteins in the turbidity formation process has been suggested (Claus, Tenzer, Sobe, Schlander, König, & Fröhlich, 2014) or the interaction between CMC and phenolic compounds (Moutounet et al. 2010). On the other hand, Claus et al. (2014) showed that the addition of CMC can prevent the growth of hydrogen tartrate crystals in red wines, however, some wines exhibited protein turbidity. More recently, Sommer, Dickescheid, Harbertson, Fischer and Cohen (2016) showed that the loss of color of red wines associated with the application of CMC required the presence of proteins and cannot be observed only with CMC and anthocyanins, it is probably related to precipitation of anthocyanins by protein bridge and not with a direct interaction between polyphenols and CMC.

Alginic acid and its conjugate base alginate are anionic polysaccharides present in the cell walls of brown algae and some bacteria. These are structural algal polysaccharides, and their function is to block desiccation, support cell integrity, and give stability to the macroalgae in water.

The bacteria *Azotobacter vinelandii* and *Pseudomonas aeruginosa* also have the ability to produce alginates.

Commercial alginates are produced primarily from *Laminaria hyperborea, Macrocystis pyrifera, Laminaria digitata, Ascophyllum nodosum, Laminaria japonica, Ecklonia maxima, Lessonia nigrescens, Durvillaea antarctica, and Sargassum spp.*

Structurally, alginates are linear unbranched polysaccharides containing blocks of D-mannuronic acid residues in β(1-4) link (M block) and L-guluronic acid residues in α(1-4) link (Usov, 1999) as well as alternating sequences of guluronic (G) and mannuronic (M) acids. Alginates are not random copolymers and the patterns of the two residues G and M differ according to the source of the algae, each with different preferences and conformational behavior. For example, the M/G ratio of alginate obtained from *Macrocystis pyrifera* is about 1.6 while that of *Laminaria hyperborea* is about 0.45, alginates with a high G content have greater industrial application (Siddhesh and Edgar, 2012). The chemical composition, molecular weight and sequence of sugar units determine the physical properties of alginate (Yang, J.-S., Xie, Y.-J., He, W. 2011). However, only alginates produced by *A. vinelandii* have a block copolymer structure similar to that extracted from seaweed species, while alginate synthesized from *Pseudomonas sp.* it does not have a G block. The composition and sequential structure may, however, vary with seasonal and growing conditions.

Furthermore, bacterial alginic acids have some of their acetylated hydroxyl groups at positions 2 or 3 (sometimes both simultaneously) of the D-mannuronic acid (M) residues.

In general, the commercial extraction of alginates is carried out using alkaline solutions to remove proteins, endotoxins, heavy metals as well as other carbohydrates. Alginates obtained from bacteria (i.e., *Pseudomonus* and *Azotobacter* species) are currently only carried out on a laboratory scale (Skj, Grasdalen, Larsen, 1986). Alginates with a very high content of guluronic acid (G) can be prepared from special algal tissues such as the outer cortex of *L. hyperborea* or by enzymatic modification in vitro using manuronan C5-epimerases from *Azotobacter vinelandii.* Isolation techniques such as fractionation and calcium precipitation can also be used to separate the G and M block-rich alginates.

The molecular weight of alginate is a crucial factor in determining its viscosity in solution, in addition to polymer concentration. The solubility and water-holding capacity of alginates are pH dependent, and precipitation occurs at about pH 3.5. Molecular weight also affects water absorption and calcium alginates with a low molecular weight or with less than 500 residues have greater water absorption. Sodium alginate and most other monovalent metal alginates are water soluble and produce high viscosity solutions, thus making them particularly useful as thickening agents. Alginates are widely used in numerous food applications as a stabilizer, thickener and emulsifier (George, Abraham, 2006). During the last decades, alginates have been widely explored and investigated as biocompatible and biodegradable natural polymers in pharmaceutical and biomedical fields (Goh, Heng, Chan, 2012; Mi, Sung, Shyu, 2002). The US Food and Drug Administration (USFDA) has already recommended alginates as a material generally recognized as safe (GRAS) (Pal, Nayak, 2015). The basis for the gelling properties of alginates is their specific ionic binding characteristics (Haug, 1964; Smidsrød, Haug, 1968; Haug, Smidsrød, 1970; Smidsrød, 1973; Smidsrød, 1974). Selective binding of certain terrestrial alkali metal ions (e.g., strong and cooperative binding of Ca²⁺ to Mg²⁺) increases markedly with increasing content of α-L-guluronate residues in the chains. The poly-D-mannuronate blocks and the staggered blocks are almost without selectivity. Alginates can also form acidic gels at pH values lower than the pKa values of uronic residues (≈3.5).

The use of alginic acid in the production of wine is nowadays already authorized with a view to its clarification by precipitation of suspended particles. Calcium and potassium alginate can also be used in sparkling wines with the same purpose as alginic acid (OIV, 2021). Since alginic acid is derived from a natural source of non-animal origin with no known allergenic effects (EU Directive 2007/68/EC), its labeling is not mandatory.

### Summary

The present application concerns a process for tartaric stabilization of wines and products derived from wine or derived from grapes with tartaric instability, characterized in that it comprises the addition of alginic acid or alginate between 5 g/hL and 100 g/hL;
and measuring the stability of the wine, products derived from wine or derived from grapes.

In one embodiment the structure of alginic acid ranges from up to 100% mannuronic acid residues to up to 100% guluronic acid residues.

In one embodiment the structure of the alginate ranges from up to 100% mannuronic acid residues to up to 100% guluronic acid residues.

In one embodiment alginic acid is used with a degree of polymerization between 10 and 1000000.

In one embodiment the alginate is used with a degree of polymerization between 10 and 1000000.

In one embodiment the alginic acid or alginate is obtained from bacteria.

In one embodiment the alginic acid or alginate is obtained from seaweed.

In one embodiment the structure of alginic acid ranges between 38% and 69% of guluronic acid residues.

In one embodiment the structure of the alginate ranges between 38% and 69% guluronic acid residues.

In one embodiment, the wines are selected from white, rose, red, base wines for sparkling wines, liqueur wines, late harvest wines or naturally sweet wines.

In one embodiment the wine derivatives are selected from vinegar, vermouth, liqueurs, wine jellies, wine-based cocktails, non-alcoholic wines, fortified and smothered wines, Jeropigas, frothy sparkling wines, sparkling wines.

In one embodiment the grape derivatives are selected from grape juice, rectified must, concentrated must.

### General description

The present patent application concerns a process for tartaric stabilization of wines and wine derivatives or grape derivatives with tartaric instability, using alginic acid or alginate.

The present invention relates to the use of alginic acid or alginate, obtained for example from algae or bacterial sources having different mannuronic acid/guluronic acid ratios for the stabilization of wines and wine or grape derivatives, for example white, rose, red wines, base wines for sparkling wines, liqueur wines, late harvest wines or naturally sweet with regard to tartaric instability caused by potassium hydrogen tartrate and calcium tartrate.

Alginic acid or alginate works as a protective colloid by slowing the growth of potassium hydrogen tartrate and calcium tartrate crystals in wines and wine or grape derivatives. The use of alginic acid or alginate as tartaric stabilizer has the advantage of being a natural polysaccharide, obtained from a non-animal, non-allergenic source, posing no problems for consumption by vegetarians and vegans.

Due to its non-animal origin, it can be used to produce wines for vegans and vegetarians, as well as being non-allergenic. Alginic acid or alginate, as polysaccharides, can be used for the same purpose in products derived from wine or grapes that present the same type of instability.

Wine derivatives are considered as, but not limited to, vinegar, vermouth, liqueurs, wine jellies, wine-based cocktails, non-alcoholic wines, fortified and muffled wines, Jeropigas, frothy sparkling wines, sparkling wines. Grape derivatives are considered to be, but not limited to, grape juice, rectified must, concentrated must.

The ability of alginic acid or alginate to stabilize wines, derivatives of wines or grapes, is dependent on the concentration added, increasing the stabilizing capacity with the increase in the quantity of alginic acid or alginate used, obtaining in most situations a stabilizer capacity with the use of alginic acid or alginate between 5 g/hL and 100 g/hL.

The impact of the use of alginic acid or alginate on wine quality is much lower than the impact of the use of cold for the stabilization of wines or derivatives and similar to the impact of the use of sodium carboxymethylcellulose, metatartaric acid and potassium polyasparte.

### Description of embodiments

Referring to the figures, some embodiments are now described in more detail, which are not, however, intended to limit the scope of the present application.

The present patent application concerns a process for tartaric stabilization of wines and wine derivatives or grape derivatives, using alginic acid or alginate.

The instability of potassium hydrogen tartrate can be measured by the decreasing of the conductivity of wine, or wine or grape derivatives, at a temperature equal to or greater than or less than 0°C, preferably 0°C, before and after the addition of potassium hydrogen tartrate, in an embodiment addition of 10g/L of potassium hydrogen tartrate.

As an example, a white wine is considered unstable with regard to potassium hydrogen tartrate when there is a decrease in conductivity greater than 3%. A red wine is considered tartarically unstable when there is a decrease in conductivity greater than 5%. For a rose wine, a decrease in conductivity of more than 3% can be considered.

In the context of the present invention, a wine, wine or grape derivative, is considered to have instability with regard to potassium hydrogen tartrate when there is a decrease in conductivity greater than 3%, measured by this method.

The instability of wine towards calcium tartrate can be measured by the decreasing of calcium values. This method is defined by decreasing the calcium content at a given temperature at which it is desired to stabilize the wine or derivative before and after adding, in one embodiment 5 g/L of calcium tartrate crystals are added. The greater the decrease in calcium, the more unstable the wine or wine or grape derivative will be.

The present process can be used in wines, wine derivatives, grape derivatives, with tartaric instability, such as white, rose, red wines, sparkling wines, liqueur wines, late harvest wines or naturally sweet wines.

The process for tartaric stabilization of the present invention comprises the following steps:
- addition of alginic acid or alginate to a wine, wine derivative, or grape derivative, in an amount between 10 g/hL and 100 g/hL;
- measurement of the stability of the wine, wine derivative, or grape derivative.

Alginic acid or alginate are added to wine, wine derivative, or grape derivative and the stability is measured by measuring their stability until the stability of wine, wine derivative, or grape derivative is reached, or by doing of the stability test by cold storage for 7 days and verifying that there is no more formation of precipitate.

The addition of alginic acid or alginate takes place under agitation at a temperature between 20 and 30°C.

In one embodiment the stability measurement takes place by the cold test method at 4°C.

In one embodiment, alginic acid or alginate is used in the process between 5g/hL and 100 g/hL of wine or wine derivative or grape derivative.

In one embodiment, the structure of alginic acid ranges from up to 100% mannuronic acid residues to up to 100% guluronic acid residues.

In one embodiment, the structure of the alginate ranges from up to 100% mannuronic acid residues to up to 100% guluronic acid residues.

In another embodiment, the structure of alginic acid ranges between 38% and 69% of guluronic acid residues.

In another embodiment, the structure of the alginate ranges between 38% and 69% guluronic acid residues.

In one embodiment, alginic acid is used with a degree of polymerization between 10 and 1000000.

In one embodiment, alginate is used with a degree of polymerization between 10 and 1000000.

In one embodiment the alginic acid or alginate is obtained from bacteria.

In one embodiment the alginic acid or alginate is obtained from seaweed.

### Application examples:

Eleven wines were randomly selected, 6 white wines, 4 rose wines and one red wine, taking into account their stability with regard to tartaric instability measured by the mini-contact test and the modified cold test (Table 1). Alginic acid was added to the wines as a technological aid in the amount of 30 g/hL and the wines were left between 20 and 30°C for 7 days. The addition of alginic acid did not cause a significant change in the pH of the wines.

After 7 days in the cold at 4°C, the instability of the wines was measured by visualizing the precipitate formation of potassium hydrogen tartrate crystals (Table 1), and differential between the amount of potassium (ΔK mg/L) between the control (wine without addition of alginic acid) and wine with addition of alginic acid after refrigeration for 7 days at 4°C.

As can be seen in Table 1, wines without the addition of alginic acid when stored at 4°C for 7 days showed the formation of precipitate. In contrast, wines containing alginic acid at 30 g/hL when stored for the same period of time at 4°C, only 4 of the wines showed the formation of a tartrate precipitate, two rose wines, one red wine and one white wine.

**Table 1. Mini-contact test and modified cold test**

| | Initial pH | Initial alcohol content (% vol) | Initial density | Initial total acidity (g/L) | Initial volatile acidity (g/L) | Initial Free SO₂ (mg/L) | Conductivity initial (mS/cm) | Formation of precipitate without technological aid (control) | Formation of precipitate with technological aid | ΔK (mg/ L) |
|---|---|---|---|---|---|---|---|---|---|---|
| WhiteW | 3,34 | 11,7 | 0,9904 | 5,7 | 0,36 | 20 | 110 (unstable) | + | - | -129 |
| RoséW | 3,28 | 11,2 | 0,9921 | 6,6 | 0,53 | 16 | 88 (unstable) | + | + | -21 |
| RedW | 3,23 | 10,1 | 0,9947 | 6,8 | 0,55 | 30 | 118 (unstable) | + | + | -19 |
| WhiteW | 3,34 | 11,2 | 0,9901 | 6,3 | 0,30 | 18 | 115 (unstable) | + | - | -96 |
| WhiteW | 3,39 | 12,4 | 0,9890 | 6,0 | 0,33 | 28 | 169 (unstable) | + | - | -147 |
| WhiteW | 3,26 | 11,9 | 0,9897 | 6,6 | 0,31 | 14 | 165 (unstable) | + | + | -29 |
| WhiteW | 3,52 | 12,9 | 0,9890 | 6,0 | 0,29 | 43 | 163 (unstable) | + | - | -79 |
| WhiteW | 3,30 | 9,7 | 0,9916 | 5,8 | 0,27 | 31 | 193 (unstable) | + | - | -157 |
| RoséW | 3,48 | 13,2 | 0,9886 | 6,0 | 0,40 | 42 | 99 (unstable) | + | - | -97 |
| RoséW | 3,32 | 11,5 | 0,9904 | 6,8 | 0,30 | 10 | 204 (unstable) | + | + | -31 |
| RoséW | 3,33 | 11,1 | 0,9909 | 6,5 | 0,52 | 12 | 137 (unstable) | + | - | -159 |

| | | | | | | | | | | |
|---|---|---|---|---|---|---|---|---|---|---|
| "+" - Visible formation of potassium hydrogen tartrate precipitate after modified cold test; "-" - No precipitate formation. | | | | | | | | | | |

73% efficiency was obtained at 30 g/hL.

The analysis of the potassium content of wines without and with the addition of alginic acid, after refrigeration at 4°C for 7 days, show that in wines in which there was formation of precipitate in wines treated with alginic acid, the differential of potassium in solution is on average only 20 mg/L while in wines in which there was no visible precipitate formation at the bottom of the tubes, the differential in potassium content is greater than 80 mg/L, showing that in these wines that remained stable after refrigeration, the addition of alginic acid made it possible to avoid the precipitation of potassium hydrogen tartrate. In wines in which the addition of alginic acid at 30 g/hL did not allow the stabilization of the wines, increasing the dose of alginic acid to 60 g/hL allowed its stabilization.

The application example described is also valid for the use of alginate, given that at the acidic pH of the wine, the alginate is protonated and transformed into alginic acid, thus alginic acid is the active ingredient of the technological aid.

The present description is, of course, in no way restricted to the embodiments presented in this document and a person with average knowledge in the field can foresee many possibilities of modification thereof without departing from the general idea as defined in the claims. The preferred embodiments described above are, of course, combinable with each other. The following claims further define preferred embodiments.

### References

Bajul, A., Gerbaud, V., Teychene, S., Devatine, A., & Bajul, G. (2017). Effect of carboxymethylcellulose on potassium bitartrate crystallization on model solution and white wine. Journal of Crystal Growth, 472, 54-63
Bosso, A., Panero, L., Petrozziello, M., Sollazzo, M., Asproudi, A., Motta, S., & Guaita, M., (2015). Use of polyaspartate as inhibitor of tartaric precipitations in wines, Food Chemistry, 185 1-6
Bosso, A., Salmaso, D., Faveri, E., Guaita, M., & Franceshi, D. (2010) . The use of carboxymethylcellulose for the tartaric stabilization of white wines, in comparison with other oenological additives. Vitis, 49, 95-99
Claus, H., Tenzer, S., Sobe, M., Schlander, M., König, H., & Fröhlich, J. (2014). Effect of carboxymethyl cellulose on tartrate salt, protein and colour stability of red wine. Australian Journal of Grape and Wine Research, 20(2), 186-193
Ding, H., Hou, R., Li, Y., Zhang, B., Zhao, B., & Liu, K. (2020) Effect of different carboxymethyl cellulose structure parameters on tartrates stability of red wine: viscosity and degree of substitution. Food Additives & Contaminants: Part A, 37,7, 1099-1109, DOI: 10.1080/19440049.2020.1755062
European Union (2009). Commission Regulation (EC) N 606/2009 of 10 July 2009 laying down certain detailed rules for implementing Council Regulation (EC) No 479/2008 as regards the categories of grapevine products, oenological practices and the applicable restrictions. L 193
George, M., & Abraham, T.E. (2006) Polyionic hydrocolloids for the intestinal delivery of protein drugs: alginate and chitosan - a review. Journal of Controlled Release 114 (1), 1-14
Gerbaud, V., Gabas, N., Blouin, J., & Crachereau, J. C. (2010). Study of wine tartaric acid salt stabilization by addition of carboxymethylcellulose (CMC): Comparison with the "Protective colloids" effect. Journal International des Sciences de la Vigne et du Vin, 44, 231-242
Goh, C.H., Heng, P.W.S., & Chan, L.W. (2012). Alginates as a useful natural polymer for microencapsulation and therapeutic applications. Carbohydrate Polymers 88, 1-12
Greeff, A. E., Robillard, B., & du Toit, W. J. (2012). Short- and long-term efficiency of carboxymethylcellulose (CMC) to prevent crystal formation in South African wine. Food Additives & Contaminants: Part A, 29, 1374-1385
Guise, R., Filipe-Ribeiro, L., Nascimento, D., Bessa, O., Nunes, F. M., & Cosme, F. (2014). Comparison between different types of carboxylmethylcellulose and other oenological additives used for white wine tartaric stabilization. Food chemistry, 156, 250-257
Haug, A, Smidsrød, O. (1970) Selectively of some anionic polymers for divalent metal ions. Acta Chemica Scandinavica 24, 843-854
Haug, A. Composition and properties of alginates. Ph.D. thesis; Norwegian Institute of Technology, Trondheim, 1964
Lasanta, C., & Gomez, J. (2012). Tartrate stabilization of wines. Trends in Food Science & Technology, 28, 1, 52-59
Mi, F.L., Sung, H.W., & Shyu, S.S. (2002) Drug Release from chitosan alginate complex beads reinforced by a naturally occurring crosslinking agent, Carbohydrate Polymers. 48 61-72
Moutounet, M., Bouissou, D., & Escudier, J.L. (2010) Effets de traitement de stabilisation tartrique de vins rouges par une gomme de cellulose (carboxymethylcellulose). http://techniloire.net/documents/124963587/ CMC%20sur%20rouges.pdf. revue internet de viticulture et oenologie, 2010, n.6/2
OIV (Organisation International de la Vigne et du Vin), (2019). International Oenological Codex. Edition Officielle, Paris
OIV (Organisation International de la Vigne et du Vin), (2021). International Code of Oenological Practices. Edition Officielle, Paris
Ribéreau-Gayon, P., Glories, Y., Maujean, A., & Dubourdieu, D. (2006). Handbook of Enology. The Chemistry of Wine Stabilization and Treatments. (2nd ed.). (Vol. 2). France: Bordeaux. Wiley & Sons Ltd., Chichester, England
Rodrigues, A., Ricardo-Da-Silva, J. M., Lucas, C., & Laureano, O. (2012). Effect of commercial mannoproteins on wine colour and tannins stability. Food Chemistry, 131(3), 907-914
Siddhesh, N.P., & Edgar, K.J. (2012). Alginate derivatization: a review chemistry, properties and applications, Biomaterials 33 (11), 3279-3305
Smidsrød, O (1974) Molecular basis for some physical properties of alginates in the gel state. Journal of the Chemical Society, Faraday Transactions 57, 263-274
Smidsrød, O. Some physical properties of alginates in solution and in the gel state. Ph.D. thesis; Norwegian Institute of Technology, Trondheim, 1973
Smidsrød, O., & Haug, A. (1968) Dependence upon uronic acid composition of some ion-exchange properties of alginates. Acta Chemica Scandinavica 22, 1987-1997
Sommer, S., Dickescheid, C., Harbertson, J. F., Fischer, U., & Cohen, S. D. (2016) . Rationale for haze formation after carboxymethyl cellulose (CMC) addition to red wine. Journal of Agricultural and Food Chemistry, 64, 6879-6887
U.S. Food and Drug Administration, Code of Federal Regulations 21CFR182.1745. https://www.ecfr.gov/cgi-bin/text-idx?node=pt21.3.182&rgn=div5#se21.3.182_11745 Usov, A.I. (1999). Alginic acids and alginates: analytical methods used for their estimation and characterization of composition and primary structure, Russian Chemical Reviews, 68, 957-966
Yang, J.-S., Xie, Y.-J., & He, W. (2011). Research progress on chemical modification of alginate: a review. Carbohydrate Polymers 84, 33-39
UE Directive 2007/68/EC dated November 28. (2007). Amending DIRECTIVE 2000/ 13/EC as regards certain food ingredients. Official Journal of the European UnionL 310eL 311, November 28, 2007

## Claims

1. Process for tartaric stabilization of wines and products derived from wine or derived from grapes with tartaric instability, comprising the addition of alginic acid or alginate between 5 g/hL and 100 g/hL, and measurement of the stability of wine, product derived from wine or derived from grapes.

2. Process according to the preceding claim, wherein the structure of the alginic acid ranges from up to 100% mannuronic acid residues and up to 100% guluronic acid residues.

3. Process according to claim 1, wherein the structure of the alginate ranges from up to 100% mannuronic acid residues to up to 100% guluronic acid residues.

4. Process according to any one of the preceding claims, wherein alginic acid is used with a degree of polymerization between 10 and 1000000.

5. A process according to any one of claims 1 to 3, wherein alginate is used with a degree of polymerization between 10 and 1000000.

6. Process according to any one of the preceding claims, wherein the alginic acid or alginate is obtained from bacteria.

7. A process according to any one of claims 1 to 5, wherein the alginic acid or alginate is obtained from seaweed.

8. Process according to any one of the preceding claims, wherein the structure of the alginic acid ranges between 38% and 69% of guluronic acid residues.

9. Process according to any one of claims 1 to 7, wherein the structure of the alginate ranges between 38% and 69% guluronic acid residues.

10. Process according to any one of the preceding claims, in which the wines are selected from white, rose, red, base wines for sparkling wines, fortified wines, late harvest wines or naturally sweet wines.

11. Process according to any one of claims 1 to 9, wherein the wine derivatives are selected from vinegar, vermouth, liqueurs, wine jellies, wine-based cocktails, non-alcoholic wines, fortified and smothered wines, Jeropigas, frothy sparkling wines, sparkling wines.

12. Process according to any one of claims 1 to 9, wherein the grape derivatives are selected from grape juice, rectified must, concentrated must.

## Amended claims

### Amended claims in accordance with Rule 137(2) EPC.

1. Process for tartaric stabilization of wines and products derived from wine or derived from grapes with tartaric instability, comprising the addition of alginic acid or alginate between 30 g/hL and 100 g/hL, and measurement of the stability of wine, product derived from wine or derived from grapes.

2. Process according to the preceding claim, wherein the structure of the alginic acid ranges from up to 1000 mannuronic acid residues and up to 100% guluronic acid residues.

3. Process according to claim 1, wherein the structure of the alginate ranges from up to 100% mannuronic acid residues to up to 100% guluronic acid residues.

4. Process according to any one of the preceding claims, wherein alginic acid is used with a degree of polymerization between 10 and 1000000.

5. A process according to any one of claims 1 to 3, wherein alginate is used with a degree of polymerization between 10 and 1000000.

6. Process according to any one of the preceding claims, wherein the alginic acid or alginate is obtained from bacteria.

7. A process according to any one of claims 1 to 5, wherein the alginic acid or alginate is obtained from seaweed.

8. Process according to any one of the preceding claims, wherein the structure of the alginic acid ranges between 38% and 69% of guluronic acid residues.

9. Process according to any one of claims 1 to 7, wherein the structure of the alginate ranges between 38% and 69% guluronic acid residues.

10. Process according to any one of the preceding claims, in which the wines are selected from white, rosé, red, base wines for sparkling wines, fortified wines, late harvest wines or naturally sweet wines.

11. Process according to any one of claims 1 to 9, wherein the wine derivatives are selected from vinegar, vermouth, liqueurs, wine jellies, wine-based cocktails, non-alcoholic wines, fortified and smothered wines, Jeropigas, frothy sparkling wines, sparkling wines.

12. Process according to any one of claims 1 to 9, wherein the grape derivatives are selected from grape juice, rectified must, concentrated must.
